# EUROPÄISCHE PATENTANMELDUNG

(11) **EP 3 736 062 A1**
(43) Veröffentlichungstag der Anmeldung: **11.11.2020**
(21) Anmeldenummer: 19173401.1
(22) Anmeldetag: 08.05.2019
(51) Int. Cl.: B21D 28/02, B21D 43/22, H02K 15/02, B21D 28/22, H02K 15/12

(54) **VERFAHREN ZUM STANZPAKETIEREN VON BLECHTEILEN ZU BLECHPAKETEN**

(71) Anmelder: voestalpine Stahl GmbH, 4020 Linz (AT)
(72) Erfinder: Fluch, Ronald, 4020 Linz (AT)
(74) Vertreter: Jell, Friedrich

(57) **Zusammenfassung**

Es wird ein Verfahren zum Stanzpaketieren von Blechteilen (2) zu Blechpaketen (3) gezeigt. Um die Trennung der verbundenen Blechteile (2) in Blechpakete (3) zu erleichtern, erfolgt ein zweites Freistanzen von mindestens einem zweiten Blechteil (20) in einem Schritt, der dem ersten Freistanzen vorhergeht, ein Zurückdrücken des Trennelements (19) in einen Bereich des Elektrobands (5), aus dem das zweite Blechteil (20) ausgestanzt worden ist, und ein Ausdrücken des Trennelements (19) aus dem Elektroband (5) mit dem ersten Freistanzen.

## Beschreibung

Die Erfindung betrifft ein Verfahren zum Stanzpaketieren von Blechteilen zu Blechpaketen, umfassend folgende Schritte: Erstes Freistanzen von ersten Blechteilen von einem Elektroband, das eine aushärtbare Klebstoffschicht, insbesondere heißhärtende Schmelzklebelackschicht, auf mindestens einer seiner Flachseiten aufweist - nachfolgendes Stapeln der ersten Blechteile und Verbinden, insbesondere stoffschlüssiges Verbinden, der gestapelten ersten Blechteile, wobei das Verfahren eine Maßnahme zur Erleichterung der Trennung der verbundenen ersten Blechteile in Blechpakete aufweist, welche Maßnahme ein Stapeln mindestens eines Trennelements mit den ersten Blechteilen umfasst.

Das Vorsehen eines Trennelements zwischen ersten Blechteilen, die in einem Schacht, anschließend an eine letzte Stanzstufe eines Folgestanzwerkzeugs, gestapelt werden, ist aus dem Stand der Technik bekannt (WO2017/060483A1). Dieses Trennelement erleichtert ein Trennen der stoffschlüssig verbunden Blechteile in Blechpakete, beispielsweise durch eine antihaftbeschichtete Oberfläche, welche die Adhäsion mit einer aushärtenden, polymeren Klebstoffschicht eines daran anschließenden ersten Blechteils reduziert. Derartige Trennelement werden unterhalb des Elektrobands in der letzten Stanzstufe zum Freistanzen eingebracht und durch das Freistanzen eines ersten Blechteils in den Schacht zum Stapeln mit den anderen ersten Blechteilen gedrückt. Nachteilig bedarf es beim Einbringen des Trennelements unterhalb des Elektrobands einer vergleichsweise genauen Positionierung des Trennelements, damit das Trennelement nicht mitgestanzt wird, was unter anderem zu Beschädigungen am Folgestanzwerkzeug führen kann.

Die Erfindung hat sich daher die Aufgabe gestellt, ein Verfahren der eingangs geschilderten Art derart zu verändern, dass trotz Verwendung eines mit den ersten Blechteilen mitgestapelten Trennelements eine hohe Standfestigkeit garantiert werden kann.

Die Erfindung löst die gestellte Aufgabe durch die Merkmale des Anspruchs 1.

Umfasst die Maßnahme zur Erleichterung der Trennung der verbundenen ersten Blechteile in Blechpakete den Schritt eines zweiten Freistanzens von mindestens einem zweiten Blechteil in einem Schritt, der dem ersten Freistanzen vorhergeht, kann das Elektroband bereits in die Maßnahme zur Erleichterung der Trennung der verbundenen ersten Blechteile in Blechpakete miteinbezogen werden. Das Elektroband weist nämlich durch das zweite Freistanzen einen ausgesparten Bereich auf, der eine Aufnahme im Elektroband darstellen kann.
Erfolgt weiter ein Zurückdrücken ("push back") des Trennelements in einen Bereich des Elektrobands, aus dem das zweite Blechteil ausgestanzt worden ist, kann das Trennelement mit dem Elektroband verbunden werden sowie gemeinsam mit dem Elektroband auch dem ersten Freistanzen zugeführt werden.
Dies hat zur Folge, dass das Trennelement dem Verfahrensschritt des Stapelns in gleicher Art und Weise zugeführt wird, wie dies auch für die ersten Blechteile der Fall ist. Aufwändig Maßnahmen an der letzten Stanzstufe, um Trennelemente zwischen den Blechteilen vorzusehen, können damit vermieden werden - ein Ausdrücken des Trennelements aus dem Elektroband mit dem ersten Freistanzen reicht hierzu aus. Zudem erfolgt über die Positionierung des Elektrobands beim ersten Freistanzen auch zwangsweise eine reproduzierbare Mitausrichtung des Trennelements gegenüber der Stanzstufe, was deren Beschädigungen sicher vermeidet. Im Gegensatz zum Stand der Technik kann daher das erfindungsgemäße Verfahren eine besonders hohe Standzeit aufweisen.

Beispielsweise kann eine aushärtbare Klebstoffschicht auf Basis von Polyvinylbutyral, Polyamide, Polyamid, Polyester, modifizierte Polyamide oder Epoxidharz sein. Vorzugsweise findet als Klebstoffschicht ein insbesondere heißhärtender, Backlack Verwendung. Aushärtbare polymere Klebstoffschichten haben sich als vorteilhaft herausgestellt.

Umfasst die Maßnahme den Schritt einer Inaktivierung, Aushärtung und/oder Entfernung der Klebstoffschicht des zweiten Blechteils, kann eine Verwendung dieses zweiten Blechteils als Trennelement ermöglich werden. Dies vermeidet nicht nur zusätzliche Trennelemente, sondern stellt auch sicher, dass die zurückgedrückten Trennelemente stets den Abmessungen der freien Bereiche am Elektroband entsprechen. Die Trennelemente können daher reproduzierbar mit dem Elektroband verbunden werden - was die Standzeit des Verfahrens weiter erhöhen kann.

Das zweite Blechteil kann als Trennelement standfest im Elektroband vorgesehen werden, wenn es vor dem Zurückdrücken zumindest bereichsweise gelängt wird. Das Längen kann beispielsweise durch Ziehen, Drücken, etc. erfolgen.

Wird das zweite Blechteil mit einem ersten Blechteil zu einem Blechpaket verbunden, wird zudem ermöglicht, das zweite Blechteil als Teil eines Blechstapels zu verwenden und damit die Ausnutzung des Elektrobands zur Ausbildung von Blechpaketen weiter zu erhöhen bzw. den Verschnitt zu reduzieren.

Der Durchsatz des Verfahrens kann durch die Maßnahmen zur Erleichterung der Trennung der verbundenen ersten Blechteile in Blechpakete unverändert bleiben, wenn dass zweite Freistanzen und Zurückdrücken in unterschiedlichen Stufen beim Stanzpaketieren erfolgt.

Vorstellbar ist, dass das zweite Freistanzen vor einem Folgestanzwerkzeug erfolgt, das mit einer zweiten Stanzstufe das erste Freistanzen durchführt. Damit bedarf es auch keiner konstruktiven Veränderungen an dem Folgestanzwerkzeug, um das Trennelement mit dem Elektroband zu verbinden.

Alternativ ist vorstellbar, dass das zweite Freistanzen von einer dritten Stanzstufe eines Folgestanzwerkzeugs durchgeführt wird, das mit einer zweiten Stanzstufe das erste Freistanzen durchführt. Dies bedarf einer konstruktiven Änderung am ansonsten aus dem Stand der Technik bekannten Folgestanzwerkzeugen, kann aber durch Vorteile in der Synchronisation der Stufen zueinander die Reproduzierbarkeit des Verfahrens weiter erhöhen.

Erfolgt das Zurückdrücken in einer Stufe unmittelbar vor dem ersten Freistanzen kann auch ein Ausdrücken des Trennelements von vorhergehenden Stufen des Folgestanzwerkzeugs nicht auftreten - was zur Erhöhung der Verfahrenssicherheit beitragen kann.

Ein Leerlauf von vorhergehenden Stanzstufen am Folgestanzwerkzeug kann vermieden werden, indem das zweite Freistanzen in einer Stufe unmittelbar vor dem Zurückdrücken erfolgt. Dies reduziert unter anderem die Gefahr einer Beschädigung deren Stempel oder damit zusammenwirkenden Matrize.

Die Verfahrenssicherheit kann weiter erhöht werden, wenn vor dem oder beim zweiten Freistanzen mindestens ein Pilotloch in das Elektroband eingestanzt wird und beim Zurückdrücken das Trennelement und das Elektroband über das Pilotloch relativ zueinander positioniert werden.

Das Elektroband kann für das Zurückdrücken besonders vorteilhaft vorbereitet werden, wenn das zweite Blechteil in seinen Außenabmessungen kleiner als das erste Blechteil freigestanzt wird.

Vorzugsweise wird das zweite Blechteil um maximal 2 mm kleiner freigestanzt.

Das Trennelement kann standfest im Elektroband aufgenommen werden, wenn zwischen Trennelement und Elektroband eine Presspassung ausgebildet wird.

Diese Presspassung kann besonders reproduzierbar ausgebildet werden, wenn das Trennelement und/oder das Elektroband Vorsprünge aufweisen, an denen sich die Presspassung ausbildet.

Vorteilhaft kann sich eine Verwendung mindestens eines, in einen Bereich eines Elektrobands, das eine aushärtbare Klebstoffschicht aufweist, zurückgedrückten Trennelements zur Erleichterung der Trennung von, aus dem Elektroband (5) freigestanzten ersten Blechteilen in Blechpakete beim Stanzpaketieren herausstellen.

In den Figuren ist beispielsweise der Erfindungsgegenstand anhand mehrerer Ausführungsvarianten näher dargestellt. Es zeigen
- Fig. 1: eine teilweise aufgerissene Seitenansicht auf eine Vorrichtung zur Durchführung des Verfahrens nach einem ersten Ausführungsbeispiel,
- Fig. 2a: eine Draufsicht auf das Elektroband in der nach Fig. 1 dargestellten Vorrichtung,
- Fig. 2b: eine Detailansicht der Fig. 2a und
- Fig. 3: eine Seitenansicht auf eine Vorrichtung zur Durchführung des Verfahrens nach einem zweiten Ausführungsbeispiel.

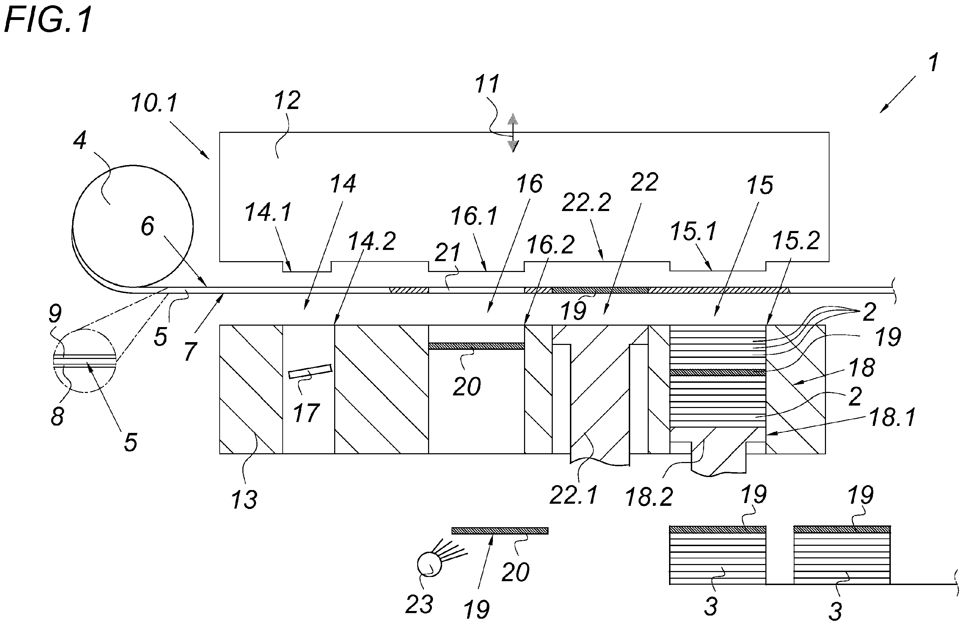

Gemäß dem ersten Ausführungsbeispiel in Fig. 1 wird eine Vorrichtung 1 zur Durchführung des erfindungsgemäßen Verfahrens schematisch dargestellt. Diese Vorrichtung 1 dient dem Paketieren freigestanzter erster Blechteile 2 zu Blechpaketen 3. Hierzu wird von einem Coil 4 ein Elektroband 5 abgehaspelt, welches auf einer oder beiden seiner Fachseiten 6, 7 eine vollflächige, aushärtbare, polymere Klebstoffschicht 8, 9, nämlich Schmelzklebstoffschicht, beispielsweise einen heißhärtenden Backlack, aufweist - welche Klebstoffschicht 8, 9 beispielsweise in der Fig. 1 im vergrößerten Ausschnitt zu erkennen ist.

Vom backlackbeschichteten Elektroband 5 werden mithilfe eines Folgestanzwerkzeugs 10.1 mehrere erste Blechteile 2 freigestanzt. Solch ein Freistanzen kann - im Allgemeinen erwähnt - ein Ausschneiden, Abschneiden, Ausklinken, Beschneiden, Zerteilen durch Ausdrücken etc. sein.

Wie außerdem der Fig. 1 zu entnehmen, führt das Stanzwerkzeug 10, beispielsweise hier ein Folgestanzwerkzeug 10.1, ein Schneiden mit mehren Hüben 11 durch, indem sein Oberwerkzeug 12 mit seinem Unterwerkzeug 13 zusammenwirkt. Hierzu weist das Stanzwerkzeug 10 mehrere Stanzstufen 14, 15, 16 auf.
Mit einer Schneide 14.1 der Vorbearbeitungsstanzstufe 14 am Oberwerkzeug 11 wird das Elektroband 5 für ein Freistanzen vorbearbeitet, wonach mit einer zweiten Schneide 15.1 der zweiten und auch letzten Stanzstufe 15 am Oberwerkzeug 11 aus dem Elektroband 5 erste Blechteile 2 freigestanzt bzw. damit vereinzelt werden. Hierzu wirken die Schneiden 14.1, 15.1, 16.1 mit den jeweiligen Matrizen 14.2, 15.2, 16.2 der Stanzstufen 14, 15, 16 am Unterwerkzeug 13 zusammen.

Solch ein Folgeschneiden ist in der Fig. 1 unter anderem daran zu erkennen, dass beim Vorbearbeitungsstanzen ein Teil 17 vom Elektroband 5 abgetrennt wird, um das Elektroband 5 für das Freistanzen des ersten Blechteils 2 vorzubereiten.

Jene, mithilfe der Stanzstufe 15 freigestanzten ersten Blechteile 2 werden durch Druck des Oberwerkzeugs 11 bzw. der Schneide 14.1 in eine Stapeleinrichtung 18 gedrängt und dort gestapelt. Die Stapeleinrichtung 18 umfasst hierzu einen Schacht 18.1 und einen Gegenhalter 18.2 im Unterwerkzeug 13. Dieser Gegenhalter 18.2 im Unterwerkzeug 13 bremst die ersten Blechteile 2, wodurch diese Blechteile 2 unter Druck des Oberwerkzeugs 11 und mithilfe der zwischen den Blechteilen 2 vorhandenen Klebstoffschicht 8, 9 eine physikalische und/oder chemische Verbindung eingehen. Im Allgemeinen wird erwähnt, dass die Stapeleinrichtung 18 aktiv beheizt werden kann, um damit die ersten Blechteile 2 im Schacht 18.1 stoffschlüssig zu verbinden. Außerdem können die ersten Blechpakete 3 nicht dargestellten weiteren Aushärtungsschritten unterworfen werden, um eine stoffschlüssige Verbindung zwischen den ersten Blechteilen 2 zu schaffen. Des Weiteren besteht die Möglichkeit einer Drehung der Stapeleinrichtung 18, um beispielsweise segmentierte Blechpakete 3 aus Lagen mit mehreren nebeneinander angeordneten und übereinander gestapelten ersten Blechteilen 2 auszubilden - was ebenfalls nicht dargestellt ist.

Um die, die Stapeleinrichtung 18 verlassenden Blechpakete 3 leichter voneinander trennen zu können, wird mit den ersten Blechteilen 2 mindestens ein Trennelement 19 mitgestapelt.

Erfindungsgemäß wird mithilfe des Elektrobands 5 das Trennelement 19 in die Stapeleinrichtung 18 eingebracht. Hierfür wird zunächst ein zweites Freistanzen mit der Stanzstufe 16 durch Zusammenwirken einer Schneide 16.1 und einer Matrize 16.2 durchgeführt, wodurch ein zweites Blechteil 20 von dem Elektroband 5 abgetrennt wird. Damit entsteht im Elektroband 5 ein ausgesparter Bereich 21.
Dieser ausgesparte Bereich 21 wird genutzt, um das Trennelement 19 im Elektroband 5 aufzunehmen - und zwar, indem das Stanzwerkzeug 10 eine Stufe 22 zum Zurückdrücken von Mitteln in das Elektroband 5 aufweist. Diese Mittel sind als beweglicher Drücker 22.1 im Unterwerkzeug und eines festen Gegenhalters 22.2 im Oberwerkzeug ausgebildet. Mit dieser Stufe 22 wird das Trennelement 19 in einen Bereich 21 des Elektrobands 5, aus dem das zweite Blechteil 20 ausgestanzt worden ist, zurückgedrückt. Damit wird das Trennelement 19 sohin im Stanzwerkzeug 10 gemeinsam mit dem Elektroband 5 befördert. Andere Mittel zum Zurückdrücken sind beispielsweise aus der DE11207002887T2 bekannt, die auch den Verfahrensschritt des Zurückdrückens offenbart.
In der letzten Stanzstufe 15 wird in weiterer Folge das Trennelement 19 aus dem Elektroband 5 ausdrückt. Damit befindet sich das Trennelement 19 in der Stapeleinrichtung 18 zwischen den ersten Blechteilen 2, was die Trennung des Blechpakete 3 beim Verlassen der Stapeleinrichtung 18 erleichtert.

Nach Fig. 1 ist zudem zu erkennen, dass die polymere Klebstoffschicht 8 auf einer Seite des zweiten Blechteils 20 durch eine Wärmequelle 23 inaktiviert worden ist. Dadurch kann auch das zweite Blechteil 20 als Trennelement 19 verwendet - und in das Elektroband 5 zurückgedrückt werden. Andere Methoden zur Inaktivierung der polymeren Klebstoffschicht 8 sind denkbar, beispielsweise Aushärtung und/oder Entfernung etc.

Da nur auf einer Seite des zweiten Blechteils 20, also die Klebstoffschicht 8 inaktiviert wird, kann das zweite Blechteil 20 nicht nur als Trennelement 19 wirken, sondern - anhand seiner zweiten, nicht inaktivierten Klebstoffschicht 9 - auch an ein Blechpaket 3 bzw. angebunden und damit mitverwendet werden. Dies stelle einen hohen Ausnutzungsgrad am Elektroband 5 sicher.

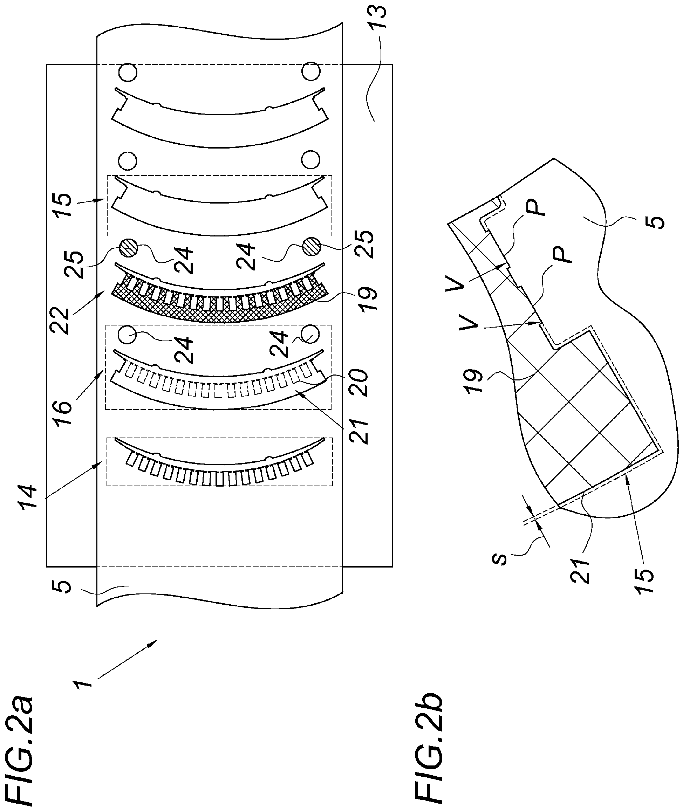

Wie Fig. 2a zu entnehmen, erfolgt das zweite Freistanzen und Zurückdrücken in unterschiedlichen Stufen 16 bzw. 22 beim Stanzpaketieren - und zwar erfolgen das Zurückdrücken in einer Stufe 22 unmittelbar vor dem ersten Freistanzen und das zweite Freistanzen in einer Stufe 22 unmittelbar vor dem Zurückdrücken. Zudem sind alle Stufen 14, 15, 16, 22 Teil des Stanzwerkzeugs 10.
Außerdem werden beim zweiten Freistanzen in das Elektroband zwei Pilotlöcher 24 eingestanzt - mit der dritten Stanzstufe 16. Mithilfe dieser Pilotlöcher 24 werden das Trennelement 19 und das Elektroband 5 relativ zueinander positioniert. Hierfür ragen zwei Stifte 25 am Drücker 22.1 in je ein Pilotloch 24 des Elektrobands 5 ein. Damit wird ein positionsgenaues Vorsehen des Trennelements 19 im ausgesparten Bereich 21 des Elektrobands 5 sichergestellt, was die Reproduzierbarkeit des Verfahrens deutlich steigert.

Nach Fig. 2b ist zu erkennen, dass das zweite Freistanzen eines zweiten Blechteils 20 mit zum ersten Blechteil 2 um den Normalabstand s geringeren Außenabmessungen erfolgt. So ist der ausgesparte Bereich 21 kleiner, als die Außenkontur der zweiten Stanzstufe 15. Vorzugsweise entspricht der Normalabstand s zwei Millimeter (mm). Außerdem ist in Fig. 2b zu erkennen, dass das Trennelement 19 Vorsprünge V aufweist. An diesen rechteckigen Vorsprüngen V bildet sich mit dem Elektroband 5 eine Presspassung P, die das Trennelement 19 im Elektroband 5 sicher festhält. Hierzu wird beispielsweise das als Trennelement 19 verwendete zweite Blechteil 20 im Bereich der Vorsprünge V gelängt. Eine Presspassung P ist aber auch bei anderen Bereichen des Trennelements 19 vorstellbar - was nicht dargestellt ist.

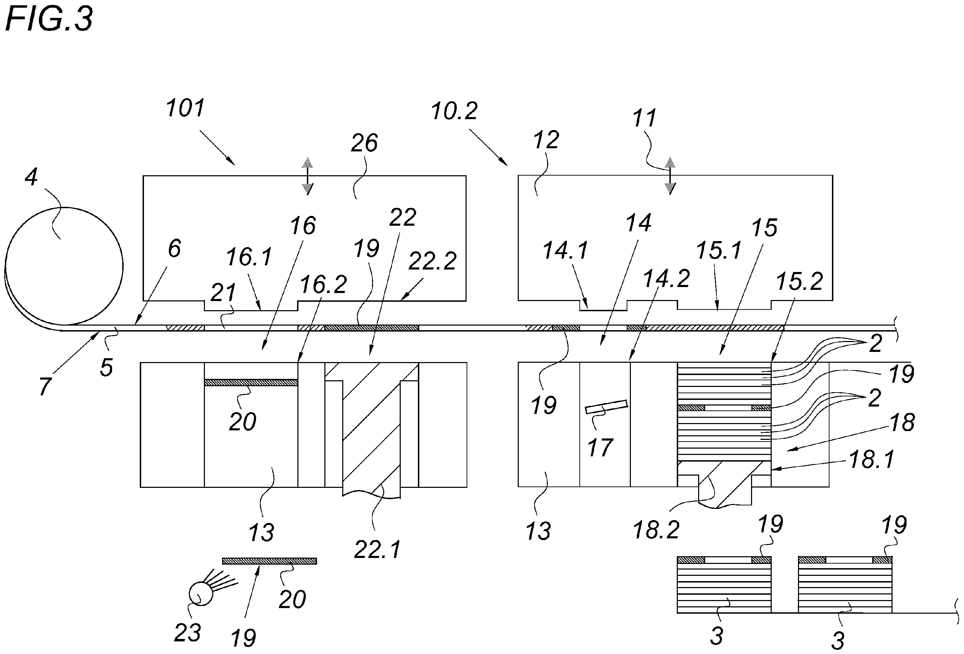

Gemäß Fig. 3 wird eine alternative Vorrichtung 101 zur Durchführung des erfindungsgemäßen Verfahrens schematisch dargestellt. Diese zweite Vorrichtung 101 unterscheidet sich gegenüber der ersten Vorrichtung 1 nach Fig. 1 durch ein zusätzliches Werkzeug 26, das vor einem zweiten Folgestanzwerkzeug 10.2 zum Stanzpaketieren vorgehen ist. Mit diesem zum zweiten Folgestanzwerkzeug 10.2 gesondert vorgesehenen Werkzeug 26 werden jene Schritte durchgeführt, wie diese durch das Folgestanzwerkzeug 10 nach Fig. 1 erfolgen, nämlich ein zweites Freistanzen und ein Zurückdrücken. Zweites Freistanzen und Zurückdrücken erfolgen also vor dem Folgestanzwerkzeuge 10.2, das mit einer zweiten Stanzstufe 16 das erste Freistanzen durchführt - außerdem wird das Vorbereitungsstanzen It. Figur 1 mithilfe der Stufe 14 des Folgestanzwerkzeugs 10.2 durchgeführt.
Bekannte Folgestanzwerkzeuge 10.2 können daher durch das Werkzeug 26 nachgerüstet werden, um das erfindungsgemäße Verfahren durchzuführen.

## Patentansprüche

1. Verfahren zum Stanzpaketieren von Blechteilen (2) zu Blechpaketen (3), umfassend folgende Schritte:
erstes Freistanzen von ersten Blechteilen (2) von einem Elektroband (5), das eine aushärtbare Klebstoffschicht (8, 9), insbesondere heißhärtende Schmelzklebelackschicht, auf mindestens einer seiner Flachseiten (6, 7) aufweist, nachfolgendes Stapeln der ersten Blechteile (2) und
Verbinden, insbesondere stoffschlüssiges Verbinden, der gestapelten ersten Blechteile (2),
wobei das Verfahren eine Maßnahme zur Erleichterung der Trennung der verbundenen ersten Blechteile (2) in Blechpakete (3) aufweist, welche Maßnahme ein Stapeln mindestens eines Trennelements (19) mit den ersten Blechteilen (2) umfasst,
**dadurch gekennzeichnet, dass** diese Maßnahme folgende Schritte umfasst:
zweites Freistanzen von mindestens einem zweiten Blechteil (20) in einem Schritt, der dem ersten Freistanzen vorhergeht,
Zurückdrücken des Trennelements (19) in einen Bereich des Elektrobands (5), aus dem das zweite Blechteil (20) ausgestanzt worden ist, und
Ausdrücken des Trennelements (19) aus dem Elektroband (5) mit dem ersten Freistanzen.

2. Verfahren nach Anspruch 1, **dadurch gekennzeichnet, dass** die Maßnahme folgenden weiteren Schritt umfasst:
Inaktivierung, Aushärtung und/oder Entfernung der Klebstoffschicht (8, 9) des zweiten Blechteils (20) und Verwendung dieses zweiten Blechteils (20) als Trennelement (19).

3. Verfahren nach Anspruch 2, **dadurch gekennzeichnet, dass** das zweite Blechteil (20) vor dem Zurückdrücken zumindest bereichsweise gelängt wird.

4. Verfahren nach Anspruch 2 oder 3, **dadurch gekennzeichnet, dass** das zweite Blechteil (20) mit einem ersten Blechteil (2) zu einem Blechpaket (3) verbunden wird.

5. Verfahren nach einem der Ansprüche 1 bis 4, **dadurch gekennzeichnet, dass** das zweite Freistanzen und Zurückdrücken in unterschiedlichen Stufen (16, 22) beim Stanzpaketieren erfolgt.

6. Verfahren nach einem der Ansprüche 1 bis 5, **dadurch gekennzeichnet, dass** das zweite Freistanzen vor einem Folgestanzwerkzeug (10.2) erfolgt, das mit einer zweiten Stanzstufe (15) das erste Freistanzen durchführt.

7. Verfahren nach einem der Ansprüche 1 bis 5, **dadurch gekennzeichnet, dass** das zweite Freistanzen von einer dritten Stanzstufe (16) eines Folgestanzwerkzeugs (10.1) durchgeführt wird, das mit einer zweiten Stanzstufe (15) das erste Freistanzen durchführt.

8. Verfahren nach Anspruch 7, **dadurch gekennzeichnet, dass** das Zurückdrücken in einer Stufe (22) unmittelbar vor dem ersten Freistanzen erfolgt.

9. Verfahren nach Anspruch 8, **dadurch gekennzeichnet, dass** das zweite Freistanzen in einer Stufe (16) unmittelbar vor dem Zurückdrücken erfolgt.

10. Verfahren nach einem der Ansprüche 1 bis 9, **dadurch gekennzeichnet, dass** vor dem oder beim zweiten Freistanzen mindestens ein Pilotloch (24) in das Elektroband (5) eingestanzt wird und dass beim Zurückdrücken das Trennelement (19) und das Elektroband (5) mit Hilfe das Pilotloch (24) relativ zueinander positioniert werden.

11. Verfahren nach einem der Ansprüche 1 bis 10, **dadurch gekennzeichnet, dass** das zweite Blechteil (20) in seinen Außenabmessungen kleiner als das erste Blechteil (2) freigestanzt wird.

12. Verfahren nach Anspruch 11, **dadurch gekennzeichnet, dass** das zweite Blechteil (20) um maximal 2 mm kleiner freigestanzt wird.

13. Verfahren nach einem der Ansprüche 1 bis 12, **dadurch gekennzeichnet, dass** zwischen Trennelement (19) und Elektroband (5) eine Presspassung (P) ausgebildet wird.

14. Verfahren nach Anspruch 13, **dadurch gekennzeichnet, dass** das Trennelement (19) und/oder das Elektroband (5) Vorsprünge (V) aufweisen, an denen sich die Presspassung (P) ausbildet.

15. Verwendung mindestens eines, in einen Bereich eines Elektrobands (5), das eine aushärtbare Klebstoffschicht (8, 9) aufweist, zurückgedrückten Trennelements (19) zur Erleichterung der Trennung von, aus dem Elektroband (5) freigestanzten ersten Blechteilen (2) in Blechpakete (3) beim Stanzpaketieren.
